# DEMANDE DE BREVET EUROPEEN

(11) **EP 0 951 088 A2**
(43) Date de publication de la demande: **20.10.1999**
(21) Numéro de dépôt: 99400850.6
(22) Date de dépôt: 08.04.1999
(51) Int. Cl.: H01M 10/40, H01M 4/62, H01M 6/18, H01M 6/16

(54) **Electrolyte solide polymère à base de polyacrylonitrile**

(30) Priorité: 16.04.1998 FR 9804744
(71) Demandeur: ALCATEL, 75008 Paris (FR)
(72) Inventeur: Hilaire, Michel, 91640 Fontenay les Briis (FR); Moneuse, Carole, 91470 Angervilliers (FR)
(74) Mandataire: Laroche, Danièle

(57) **Abrégé**

La présente invention a pour objet un électrolyte solide polymère comprenant un polymère, qui est un polyacrylonitrile, un plastifiant composé d'un sel de lithium en solution dans un solvant organique liquide, et un agent de renforcement qui est un composé organique, caractérisé en ce que ledit composé organique est constitué de grains poreux d'un polymère comprenant des motifs polyamide.

## Description

La présente invention concerne un électrolyte solide polymère à base de polyacrilonitrile destiné à être utilisé dans un générateur rechargeable au lithium.

Les électrolytes solides polymères, dit gélifiés, comprennent un polymère auquel a été incorporé un plastifiant contenant des solvants organiques et un sel de lithium. Le plastifiant est piégé dans la structure tridimensionnelle du polymère. Le produit obtenu forme une phase unique.

Les électrolytes gélifiés à base de polyacrylonitrile présentent une mauvaise tenue mécanique en cyclage qui se traduit notamment par une diminution de l'épaisseur de la couche d'électrolyte. Ce fluage participe au vieillissement prématuré du générateur et écourte sa durée d'utilisation. Ce phénomène est accentué lorsque le générateur doit fonctionner à des températures dépassant 45°C.

Pour remédier à ce problème, il a été proposé d'ajouter à l'électrolyte un agent de renforcement constitué par une charge minérale, notamment à base de silice. Cette solution nécessite l'addition d'environ 5 à 10% en masse d'additif, ce qui représente un volume important en raison de la faible densité de ces charges, de l'ordre de 36mg/cm³.

Le brevet US-5,631,103 décrit un électrolyte comprenant un polymère gélifié et une charge dont la proportion représente plus de 50% en poids de l'électrolyte. La charge est soit un matériau inorganique, soit un polymère inerte.

L'ajout de telles charges représente un volume considérable. Il en résulte des défauts de mouillage par le plastifiant, et une hétérogénéité de la répartition de la charge. Ceci se traduit par des dispersions dans les performances et une durée de vie à température élevée qui n'est pas améliorée. En outre ces mélanges ont une mauvaise coulabilité qui rend leur enduction difficile par des moyens industriels.

La présente invention a pour but de proposer un électrolyte solide polymère gélifié qui présente une résistance mécanique satisfaisante lors de son utilisation dans un générateur électrochimique de telle sorte que sa durée de vie soit prolongée, notamment lors de son fonctionnement à des températures supérieures à 45°C.

L'objet de la présente invention est un électrolyte solide polymère comprenant un polymère, qui est un polyacrylonitrile, un plastifiant composé d'un sel de lithium en solution dans un solvant organique liquide, et un agent de renforcement qui est un composé organique, caractérisé en ce que ledit composé organique est constitué de grains poreux d'un polymère comprenant des motifs polyamide.

La taille des pores de ces grains est de 0,7±0,2µm et leur volume poreux est compris entre 0,2 et 0,6cm³/g. On constitue ainsi une réserve de plastifiant à l'intérieur du volume poreux disponible ce qui contribue à prolonger la durée de vie du générateur.

Les grains ont une masse volumique comprise entre 1 et 1,2g/cm³ et une surface spécifique comprise entre 1 et 30m²/g. Leur dimension moyenne est comprise entre 5 ± 1,5µm et 60 ± 1,5µm.

La proportion dudit agent est de préférence comprise entre 1 et 10% en poids dudit électrolyte.

La présente invention a aussi pour objet un générateur contenant un électrolyte selon l'invention dans lequel la matière active négative est un matériau carboné susceptible d'insérer du lithium dans sa structure.

La présente invention a encore pour objet un procédé de fabrication de l'électrolyte solide polymère gélifié selon l'invention. Le procédé comprend les étapes suivantes.

D'une part on imprègne les grains du composé organique avec le solvant.

D'autre part on réalise le mélange du plastifiant, composé du sel de lithium en solution dans le solvant organique liquide, avec le polymère. De préférence le polymère est sous forme de poudre. Cette opération est effectuée préférentiellement à chaud, mais néanmoins à une température inférieure à 100°C pour éviter la décomposition du sel de lithium. Le mélange prend alors la consistance visqueuse d'un gel.

Puis on introduit les grains imprégnés de solvant dans le mélange gélifié.

Enfin on met en forme l'électrolyte constitué du mélange contenant les grains, par exemple en coulant le mélange dans un moule ou sur une plaque sous forme de film. De préférence cette opération de mise en forme s'effectue à chaud, à une température inférieure à 100°C.

Pour éviter le cisaillement des chaînes de polymère, le gel peut être pressé,par exemple entre une plaque de polytétrafluoroéthylène (PTFE) et une feuille d'aluminium. Ainsi on peut obtenir des films de gel de faible épaisseur, par exemple de l'ordre de 100µm.

D'autres caractéristiques et avantages de la présente invention apparaîtront au cours des exemples suivants de réalisation, donnés bien entendu à titre illustratif et non limitatif, et dans le dessin annexé sur lequel:
- la figure 1 montre un accumulateur de format bouton contenant un électrolyte solide polymère,
- la figure 2 représente le cyclage de deux accumulateurs de format bouton contenant un électrolyte solide polymère, l'un selon l'art antérieur et l'autre contenant un agent de renforcement selon l'invention ; la capacité C en mAh/g de matière active positive est donné en ordonnée, et en abscisse le nombre de cycles N effectués.

### EXEMPLE 1

On réalise un film d'électrolyte solide polymère selon l'art antérieur de la manière suivante.

On prépare un solvant organique composé de 20% en poids de carbonate de propylène (PC) et de 80% en poids de carbonate d'éthylène (EC). Les solvants sont préalablement séchés sur alumine, puis on effectue le mélange des solvants en chauffant à 40°C afin de liquéfier le EC.

On dissout la poudre de polyacrylonitrile dans le solvant, puis on ajoute l'hexafluorophosphate de lithium (LiPF₆). Cette opération est réalisée à 90°C.

On coule alors l'électrolyte chaud sur une plaque de matériau inerte afin d'obtenir un film de 120µm d'épaisseur dans laquelle on découpe un disque de 21mm de diamètre. L'électrolyte se compose de 81% en poids de solvant organique, 10% de polyacrylonitrile et 9% de sel de lithium.

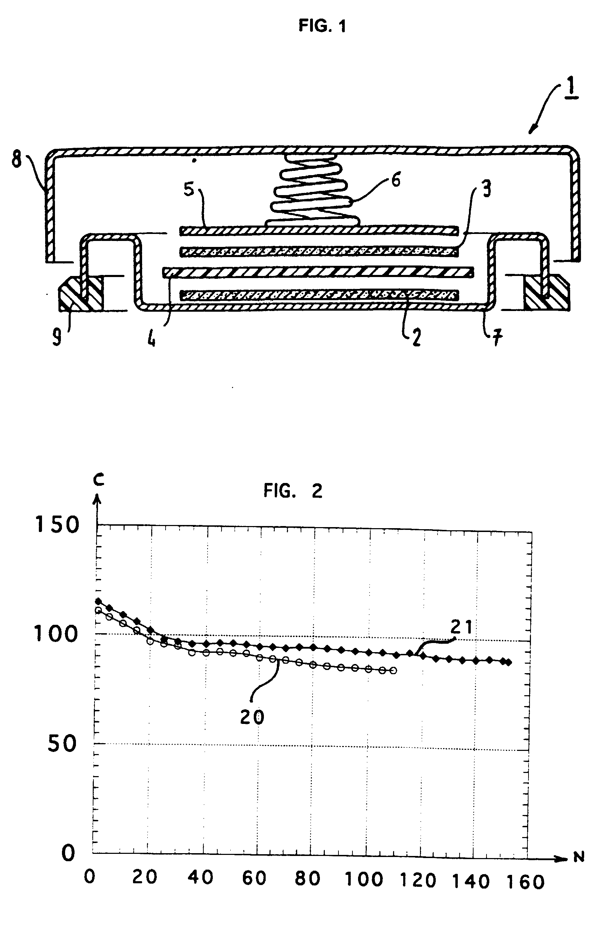

Un accumulateur 1 de format bouton est assemblé comme représenté sur la figure 1. Une cathode 2 est fabriquée en incrustant une certaine quantité d'une pâte contenant la matière active positive qui est un oxyde lithié de manganèse LiMn₂O₄ sur un collecteur de courant. Après séchage et découpe avec un outil approprié, on obtient une électrode ayant la forme d'un disque de 12mm de diamètre. L'anode 3 est constituée par un disque de lithium métallique de diamètre 16mm. Les électrodes 1 et 2 sont séparées par le film d'électrolyte 4 précédemment fabriqué. Une cale en inox 5 assure la reprise du courant et un ressort 6 maintient le contact entre les différents éléments du générateur. L'ensemble est imprégné d'électrolyte et disposé dans une coupelle 7 fermée de manière étanche par un couvercle 8 par l'intermédiaire d'un joint 9 en polypropylène.

Deux accumulateurs identiques sont ensuite évalués électrochimiquement, l'un en cyclage et l'autre en stockage à température élevée.

D'une part un test de cyclage est réalisé dans les conditions suivantes :
- cycles 1 à 18 : charge à Ic/10 jusqu'à une tension de 4,3V,
   décharge à lc/10 jusqu'à une tension de 3V ;
- à partir du cycle 19 : charge à Ic/10 jusqu'à une tension de
   4,3V, décharge à Ic/10 jusqu'à une tension de 3V;
(où Ic est le courant nécessaire pour décharger la capacité nominale de l'accumulateur en 1 heure).

Le résultat du cyclage durant 110 cycles est donné par la courbe 20 de la figure 2. La capacité initiale de l'accumulateur est de 1 10mAh/g, et décroît jusqu'à 85mAh/g au cycle 109. Il s'est produit alors un court-circuit qui a provoqué la fin de vie de l'accumulateur. Lors de l'ouverture de l'accumulateur, on observe que le film d'électrolyte est aminci et déchiré. Cet état résulte de la traction exercée sur le film par les variations dimensionnelles des électrodes au cours du cyclage.

D'autre part on réalise un test de stockage à température élevée. On effectue un cycle de charge/décharge à température ambiante à un régime de 115mAh/g de matière active . Puis l'accumulateur est stocké pendant un mois à 45°C. Lors de l'ouverture de l'accumulateur, on observe que le film d'électrolyte présente des fissures qui seront la cause de courts-circuits et de la défaillance prématurée du générateur.

### EXEMPLE 2

On réalise un film d'électrolyte solide polymère selon l'invention de la manière suivante.

On prépare 8g d'un solvant organique composé de 20% en poids de carbonate de propylène (PC) et de 80% en poids de carbonate d'éthylène (EC) comme dans l'exemple 1. On imprègne par le solvant 0,4g de grains d'additif qui est un polyamide vendu sous la marque commerciale "ORGASOL" par la société ATOCHEM.

On dissout 1g de poudre de polyacrylonitrile, puis 0,934g d'hexafluorophosphate de lithium (LiPF₆) dans le solvant maintenu à environ 90°C. On coule alors l'électrolyte chaud sur une plaque de matériau inerte afin d'obtenir un film de 120µm d'épaisseur.

On assemble un accumulateur de format bouton, analogue à celui de la fig.1, contenant le film d'électrolyte selon l'invention. On évalue un accumulateur en cyclage et un accumulateur en stockage comme décrit dans l'exemple 1.

Le résultat du cyclage durant 152 cycles est donné par la courbe 21 de la figure 2. La capacité initiale de l'accumulateur cyclé est de 115mAh/g, et décroît jusqu'à 90mAh/g. La durée de vie de cet accumulateur a été prolongée de 38% par rapport à l'art antérieur.

Lors de l'ouverture de l'accumulateur qui a subit le test de stockage à 45°C, le film d'électrolyte présente un aspect non dégradé et son épaisseur est de 70µm.

Bien entendu, les diverses applications numériques fournies ne le sont qu'à titre d'exemple non limitatif.

## Revendications

1. Electrolyte solide polymère comprenant un polymère, qui est un polyacrylonitrile, un plastifiant composé d'un sel de lithium en solution dans un solvant organique liquide, et un agent de renforcement qui est un composé organique, caractérisé en ce que ledit composé organique est constitué de grains poreux d'un polymère comprenant des motifs polyamide.

2. Electrolyte selon la revendication 1, dans lequel ledit la taille de pores desdits grains est de 0,7±0,2µm.

3. Electrolyte selon l'une des revendications 1 et 2, dans lequel lesdits grains ont un volume poreux compris entre 0,2 à 0,6cm³/g.

4. Electrolyte selon l'une des revendications précédentes, dans lequel lesdits grains ont une masse volumique comprise entre 1 et 1,2g/cm³.

5. Electrolyte selon l'une des revendications précédentes, dans lequel lesdits grains ont une surface spécifique comprise entre 1 et 30m²/g.

6. Electrolyte selon l'une des revendications précédentes, dans lequel lesdits grains ont une dimension moyenne comprise entre 5±1,5µm et 60±1,5µm.

7. Electrolyte selon l'une des revendications précédentes, dans lequel la proportion dudit agent est comprise entre 1 et 10% en poids dudit électrolyte.

8. Générateur contenant un électrolyte selon l'une des revendications précédentes, dans lequel la matière active négative est un matériau carboné susceptible d'insérer du lithium dans sa structure.

9. Procédé de fabrication d'un électrolyte selon l'une des revendications 1 à 7, comprenant les étapes suivantes:
- on imprègne lesdits grains avec ledit solvant,
- on réalise le mélange dudit plastifiant avec ledit polymère,
- on introduit lesdits grains imprégnés dans ledit mélange,
- on met en forme ledit électrolyte constitué dudit mélange contenant lesdits grains.
